# EUROPEAN PATENT SPECIFICATION

(11) **EP 3 590 163 B1**
(45) Date of publication and mention of the grant of the patent: **10.03.2021**
(21) Application number: 17835883.4
(22) Date of filing: 28.11.2017
(51) Int. Cl.: H02G 3/10, H02G 3/18

(54) **AN ELECTRICAL OUTLET ASSEMBLY**
STECKDOSENANORDNUNG
ENSEMBLE DE PRISES DE COURANT

(30) Priority: 01.03.2017 MY PI2017700712
(43) Date of publication of application: 08.01.2020
(73) Proprietor: A. & H. Meyer SDN. BHD., Selangor, 40150 (MY)
(72) Inventor: LENHARDT, Peter, 40150 Shah Alam, Selangor (MY)
(74) Representative: Renaudo, Adrien Hanouar
(86) International application number: PCT/MY2017/050077
(87) International publication number: WO 2018/160054

(56) References cited:
- GB-A- 2 229 869
- US-B1- 6 497 586

## Description

### Background of the Invention

### Field of the Invention

This invention relates to an electrical outlet, and more particularly to a device for electrical receptacles or sockets, which has structural features adapted for ease of assembly and maintenance, and also adding aesthetics to the device.

### Description of Related Arts

Conventional wall outlets are often disadvantageous in that electrical plugs received therein sometimes prevent items such as furniture from being positioned as desired or are inadvertently disconnected or damaged by furniture.

Various devices have been disclosed for either covering wall outlet receptacles or for plugging the receptacles. For example, US Patent Number 7,323,639 B1 disclosed a convertible electrical device cover including a base plate and an adapter plate that are both configured to accommodate an electrical device.

Another example such as US Patent Number 6,478,587 B2 disclosed a retractable electric wall outlet assembly includes a housing with an electrical box capable of retraction or extension relative to the housing. The side walls of the electrical box define a cross-sectional area is slightly smaller than a cross-sectional area defined by the side walls of the housing such that the electrical box may be slidably received into or extended from the interior space of the housing. The electrical box includes flanges integrally attached to and extending rearwardly from connecting edges of the side walls thereof, the flanges mating with corresponding stops mounted within the housing. The stops are positioned approximately midway between the back plate and the open housing front so as to preclude the electrical box from being entirely removed from the housing.

However, those cited arts mentioned above require a plurality of mounting screws either to tighten socket body to socket frame or engage the cover to the socket body. The mountings screws therein are visible from the appearance which may affect the aesthetics of the device for electrical outlets or sockets Furthermore, the use of said mounting screws may also complicate the setting-up process as tools are required for installation and maintenance. In addition, applying excessive force to the mounting screws may damage to the wall or the socket body where the aesthetics may be affected. Finally, prior locking mechanisms found in the electrical socket tend to include a significant amount of components such as a decorative cover to add on the aesthetics of the electrical socket. The number of components increases manufacturing complexity, and therefore manufacturing cost, in addition to increasing component cost.

CN 203180184 (U) disclosed a desktop socket comprises a socket body and a socket frame. The socket body engaged to the socket frame through a shaft where the outer sleeve of the shaft is connected to a spring member to enable the socket body to flip in an opened position. However, the pivot mechanism found in this cited art required several steps for dismantling of the desktop socket, thereby making the maintenance process more cumbersome.

US 6 497 586 B1 discloses an electrical outlet assembly comprising a frame with electrical outlets, a body profile having a channel structure extending from an outer surface of the body profile, and a pair of end caps to engage with both ends of the body profile. The frame of the outlets is engaged with the channel structure to form an assembly.

Therefore, it is desirable to have an electrical outlet that is designed with ease of assembly and maintenance. Further, minimising use of accessories such as mounting screws is adding aesthetic value of the electrical outlet, while eliminating additional decorative cover to improve aesthetics of the electrical outlet. Said decorative cover complicates the installation process and is cost consuming.

### Summary of Invention

It is an objective of the present invention to provide an electrical outlet assembly which is simple and ease of installation.

It is also an objective of the present invention to provide the electrical outlet assembly which is easy to dismantle for maintenance.

It is yet another objective of the present invention to provide the electrical outlet assembly that adding aesthetics by reducing the use of tools such as mounting screws on the surface of the electrical socket.

It is a further objective of the present invention to provide the electrical outlet assembly incorporated with a locking mechanism without using an additional decorative cover to improve aesthetics so as to considerably reduce the manufacturing cost.

Accordingly, these objectives are achieved by following the teachings of the present invention as defined by appended claim 1.

### Brief Description of the Drawings

The features of the invention will be more readily understood and appreciated from the following detailed description when read in conjunction with the accompanying drawings of the preferred embodiment of the present invention, in which:
Fig. 1 is a drawing showing an exploded view of an electrical outlet assembly;
Fig. 2 is a drawing showing a cross-sectional view of a body profile;
Fig. 3 is a drawing showing a front view of the electrical outlet assembly;
Fig. 4 is a drawing showing a cross-sectional view of a locking mechanism of the electrical outlet assembly, in which each of a pair of end caps is engaged with the body profile in an opened/loose contour;
Fig. 5 is a drawing showing a cross-sectional view of the locking mechanism of the electrical outlet assembly, in which each of the pair of end caps is engaged with the body profile and covered the contour of the body profile perfectly when a pin is slidably fitted into a slot; and
Fig. 6 is a drawing showing an assembled view of the electrical outlet assembly where a lip is locked at the rear of the body profile.

### Detailed Description of the Invention

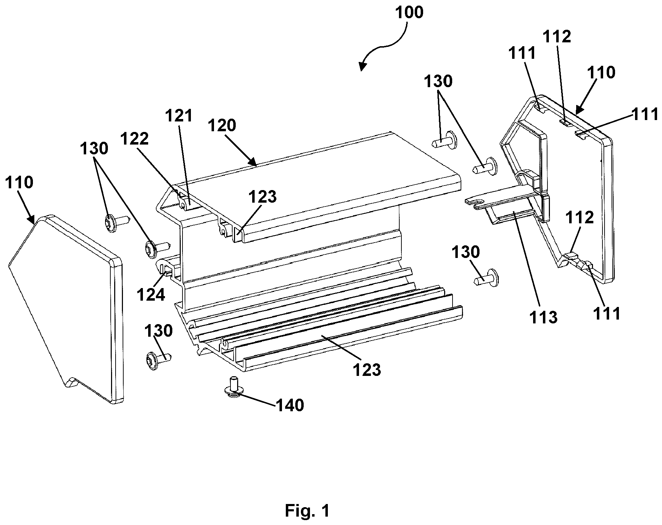

As required, detailed embodiments of the present invention are disclosed herein; however, it is to be understood that the disclosed embodiments are merely exemplary of the invention, which may be embodied in various forms. Therefore, specific structural and functional details disclosed herein are not to be interpreted as limiting but merely as a basis for claims. It should be understood that the drawings and detailed description thereto are not intended to limit the invention to the particular form disclosed, but on the contrary, the invention is to cover all modifications, equivalents and alternatives falling within the scope of the present invention as defined by the appended claims. As used throughout this application, the word "may" is used in a permissive sense (i.e., meaning having the potential to), rather than the mandatory sense (i.e., meaning must). Similarly, the words "include," "including," and "includes" mean including, but not limited to. Further, the words "a" or "an" mean "at least one" and the word "plurality" means one or more, unless otherwise mentioned. Where the abbreviations or technical terms are used, these indicate the commonly accepted meanings as known in the technical field. For ease of reference, common reference numerals will be used throughout the figures when referring to the same or similar features common to the figures. The present invention will now be described with reference to Figs. 1-6.

The present invention relates an electrical outlet assembly (100), comprising a frame accommodating an electrical socket,
a body profile (120) having a trough structure (124) extended from an outer surface of the body profile (120), a channel structure (123) and a plurality of channels (121) extended from an inner surface of the body profile (120);
wherein the plurality of channels (121) are each independently extended from the inner surface of the body profile (120) via a recess (122) forming a slot (125) therebetween;
a guarding means (130) inserted into both ends of the plurality of channels (121);
a pair of end caps (110) wherein each of the pair of end caps (110) has a lip (113), a plurality of pins (111), and a plurality of stoppers (112), to engage with a respective end of the two ends of the body profile (120);
wherein each of the lips (113) is slidably coupled to the trough structure (124) and further secured by a fastening means (140), each of the plurality of pins (111) is slidably fitted into a respective one of the slots (125), engaged with the guarding means (130) and seated at the recess (122) for locking each of the pair of end caps (110) to the body profile (120), and the frame is engaged with the channel structure (123), so that the electrical socket and the body profile (120) form one assembly.

In a preferred embodiment of the electrical outlet assembly (100), the plurality of channels (121) is configured into C-shape.

In a preferred embodiment of the electrical outlet assembly (100), the guarding means (130) is a screw.

In a preferred embodiment of the electrical outlet assembly (100), the plurality of stoppers (112) is positioned next to the plurality of pins (111), to support stability of the engagement between the pair of end caps (110) and the body profile (120).

Below is an example of an electrical outlet assembly from which the advantages of the present invention may be more readily understood. It is to be understood that the following example is for illustrative purpose only and should not be construed to limit the present invention in any way.

### Examples

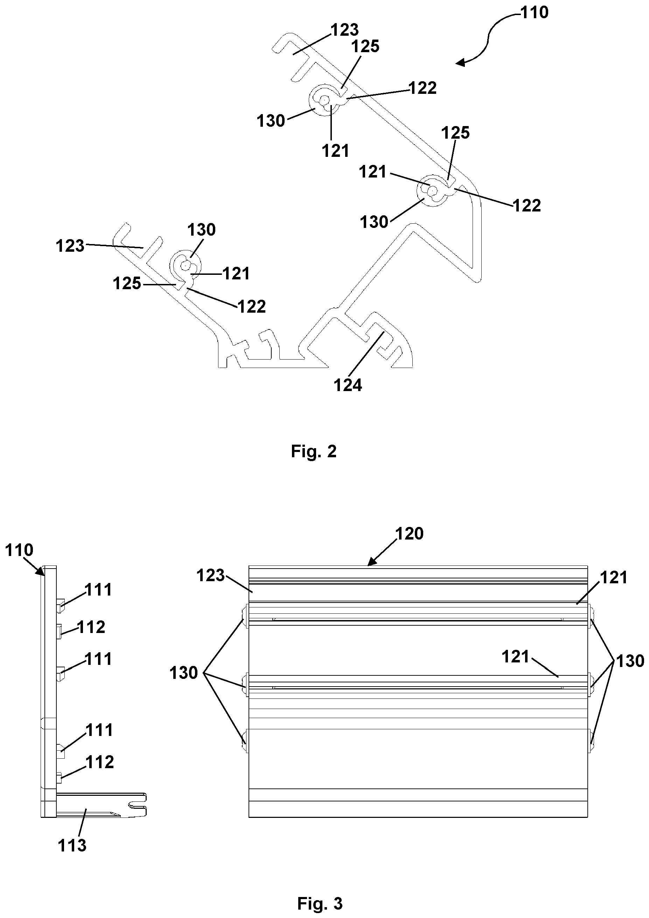

The present invention relates to an electrical outlet assembly (100) comprises a frame for accommodating electrical socket or receptacle; characterized by a body profile (120) as illustrated in Fig. 2 having a trough structure (124) extended from an outer surface of the body profile (120), a channel structure (123) and a plurality of channels (121) extended from an inner surface of the body profile (120). Fig. 1 shows an exploded view of the electrical outlet assembly (100). The plurality of channels (121) is extended from the inner surface of the body profile (120) via a recess (122) forming a slot (125) therebetween. In a preferred embodiment, the plurality of channels (121) is configured into C-shaped. In a preferred embodiment, the body profile (120) is made of aluminium.

In a preferred embodiment, the frame is incorporated with a plurality of clips positioned surrounding perimeter of the frame, whereas the electrical socket has a plurality of slits extended from perimeter of the electrical socket. The plurality of clips is engaged with the plurality of slits to connect the frame and electrical socket in one assembly. The frame accommodating the electrical socket is engaged with the channel structure (123). In a preferred embodiment, the channel structure (123) is in a U-shaped configuration. The frame accommodating the electric socket is adapted to have a thickness which can be slidably coupled to the channel structure (123).

A guarding means (130) is inserted into both ends of the plurality of channels (121) as illustrated in Figs 3, 4, and 6, resulting the slot (125) has a smaller space in terms of width compared to the width of the recess (122). In a preferred embodiment, the guarding means (130) is a screw or any other similar components.

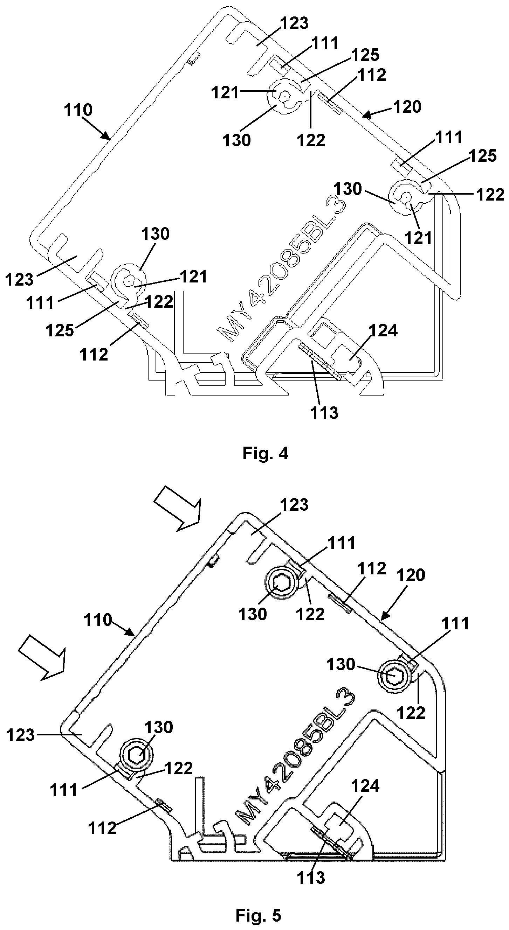

A pair of end caps (110) each having a lip (113), a pin (111), and a stopper (112) inwardly extended from the pair of end caps (110) and engaged to both ends of the body profile (120), thereby enclosing the electrical socket and the body profile (120) in one assembly. When the pair of end caps (110) are engaged to the body profile (120), the pin (111) is positioned beside an entrance of the slot (125), resulting the pair of end caps (110) loosely/partially cover the contour of the body profile (120) as shown in Fig. 4. In order for the pair of end caps (110) aligned with both ends of the body profile (120) and perfectly covers the contour of both ends of the body profile (120), the pin (111) has to be slidably fitted into the slot (125) as shown in Fig. 5. In a preferred embodiment, the stopper (112) is positioned next to the pin (111) to support stability of the engagement between the pair of end caps (110) and the body profile (120).

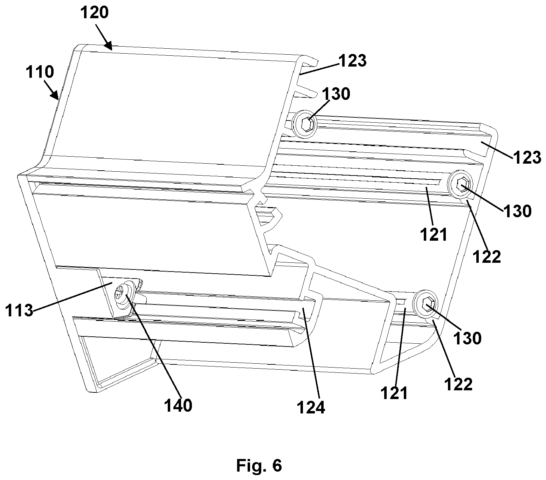

In a final position of the pair of end caps (110) where the lip (113) is adapted to be slidably coupled to the trough structure (124) as referred to Fig. 6, a fastening means (140) is further secured the lip (113) of each of the pair of end caps (110) to the trough structure (124). In a preferred embodiment, the fastening means (140) is mounted from bottom side of the body profile (120). In a preferred embodiment, the fastening means (140) is selected from a metrical screw with a nut connection, a self tapping screw, a safety pin, or any combination thereof. The fastening means (140) provides a safety connection between the pair of end caps (110) and the body profile (120) in order to avoid unintentional opening or unintentional sliding of the pair of end caps (110) against the both ends of the body profile (120). In the circumstances, the pair of end caps (110) are configured in such a manner of locking mechanism, in which reduces the use of tools for installation, has added a technical advantage of ease of assembly and maintenance. In addition to said locking mechanism, as the fastening means (140) is preferably mounted to the bottom of the electrical outlet assembly, therefore it does not require an additional decorative cover to improve the aesthetics in which known by a person skilled in the art. Furthermore, the electrical outlet assembly (100) is adapted in such a manner of less compact considerably reduce the overall manufacturing cost.

The pair of end caps (110) and the body profile (120) form a planar surface in assembled position which will be used for mounting the electrical outlet assembly (100) to a flat surface by using a securing means, preferably a double-sided adhesive tape.

Although the present invention has been described with reference to specific embodiments, also shown in the appended figures, it will be apparent for those skilled in the art that many variations and modifications can be done within the scope of the invention as described in the specification and defined in the following claims.

Description of the reference numerals used in the accompanying drawings according to the present invention:

| **Reference Numerals** | **Description** |
|---|---|
| 100 | Electrical outlet assembly |
| 110 | A pair of end caps |
| 111 | A plurality of pins |
| 112 | A plurality of stoppers |
| 113 | Lip |
| 120 | Body profile |
| 121 | A plurality of channels |
| 122 | Recess |
| 123 | Channel structure |
| 124 | Trough structure |
| 125 | Slot |
| 130 | Guarding means |
| 140 | Fastening means |

## Claims

1. An electrical outlet assembly (100), comprising a frame accommodating an electrical socket,
a body profile (120) having a trough structure (124) extended from an outer surface of the body profile (120), a channel structure (123) and a plurality of channels (121) extended from an inner surface of the body profile (120);
wherein the plurality of channels (121) are each independently extended from the inner surface of the body profile (120) via a recess (122) forming a slot (125) therebetween;
a guarding means (130) inserted into both ends of the plurality of channels (121);
a pair of end caps (110) wherein each of the pair of end caps (110) has a lip (113), a plurality of pins (111), and a plurality of stoppers (112), to engage with a respective end of the two ends of the body profile (120);
wherein each of the lips (113) is slidably coupled to the trough structure (124) and further secured by a fastening means (140), each of the plurality of pins (111) is slidably fitted into a respective one of the slots (125), engaged with the guarding means (130) and seated at the recess (122) for locking each of the pair of end caps (110) to the body profile (120), and the frame is engaged with the channel structure (123), so that the electrical socket and the body profile (120) form one assembly.

2. The electrical outlet assembly (100) according to claim 1, wherein the plurality of channels (121) is configured into C-shape.

3. The electrical outlet assembly (100) according to claim 1, wherein the guarding means (130) is a screw.

4. The electrical outlet assembly (100) according to claim 1, wherein the stopper (112) is positioned next to the pin (111), to support stability of the engagement between the pair of end caps (110) and the body profile (120).

## Patentansprüche

1. Eine Steckdosenanordnung (100), die Folgendes umfasst: Ein Rahmen, der eine Steckdose aufnimmt;
ein Gehäuseprofil (120), die Folgendes beinhaltet: eine Wannenkonstruktion (124), die sich aus
einer Außenfläche eines Gehäuseprofils (120) erstreckt; eine Kanalkonstruktion (123); und eine
Vielzahl an Kanälen (121), die sich aus einer Innenfläche des Gehäuseprofils (120) erstreckt; wobei die Vielzahl an Kanälen (121) jeder
sich separat aus
der Innenfläche des Gehäuseprofils (120) über eine Ausnehmung (122) streckt und einen Schlitz (125) dazwischen bildet;
ein Schutzmittel (130), das in beide Enden der Vielzahl an Kanälen (121) eingebaut ist;
ein Paar Abschlusskappen (110), wobei jedes Paar der Abschlusskappen (110) ein Rand (113), eine Vielzahl an Polen (111) sowie eine Vielzahl an Verschlussstöpseln (112) hat,
um mit dem jeweiligen Ende der zwei Enden des Gehäuseprofils (120) einzurasten; wobei jeder Rand
(113) verschiebbar mit
der Wannenkonstruktion (124) verbunden und darüber hinaus mit einem Befestigungsmittel (140) befestigt ist;
jedes der Vielzahl an Polen (111) ist verschiebbar in das jeweilige Schlitz (125) eingebaut,
mit dem Schutzmittel (130) eingerastet und bei der Ausnehmung (122) angeordnet worden, um jedes Paar der Abschlusskappen (110) mit dem Gehäuseprofil (120) zu schließen, und der Rahmen ist mit der Kanalkonstruktion (123) eingerastet, sodass
die Steckdose
und dass Gehäuseprofil (120) eine Anordnung bilden.

2. Die Steckdosenanordnung (100) gemäß Anspruch 1, wobei die Vielzahl an Kanälen (121) in eine C-Form konfiguriert ist.

3. Die Steckdosenanordnung (100) gemäß Anspruch 1, wobei der Schutzmittel (130) eine Schraube ist.

4. Die Steckdosenanordnung (100) gemäß Anspruch 1, wobei die Vielzahl an Verschlussstöpseln (112) neben eine Vielzahl an Polen (111) positioniert ist, um die Stabilität des Einrastens zwischen dem Paar an Abschlusskappen (110) und dem Gehäuseprofil (120) zu unterstützen.

## Revendications

1. L'ensemble de prise électrique (100), comprenant un cadre recevant la prise électrique,
un profilé de corps (120) d'une structure transversale (124) s'étendant depuis la surface extérieure du profilé de corps (120), une structure de canal (123),
et la pluralité de canaux (121) s'étendant depuis la surface intérieure du profilé de corps (120) ;
dans lequel la pluralité de canaux (121) s'étendent chacun indépendamment de la surface intérieure du profilé de corps (120), par l'évidement (122) formant la fente (125) entre eux ;
un moyen de protection (130) inséré dans les deux extrémités de la pluralité de canaux (121);
une paire de capuchons d'extrémité (110), dans lequel chacun de la paire de capuchons d'extrémité (110) dispose d'une lèvre (113), une pluralité de broches (111), une pluralité de butées (112), pour l'engagement avec l'extrémité respective des deux extrémités du profilé de corps (120) ;
dans lequel chacune des lèvres (113) est couplée de manière coulissante à la structure transversale (124), et est en outre fixé à l'aide des moyens de fixation (140), chacune de la pluralité de broches (111) est couplée de manière coulissante dans l'une des fentes (125) respectives,
engagé avec le moyen de protection (130) et logé dans l'évidement (122) pour verrouiller chacune des paires de capuchons d'extrémité (110) au profilé de corps (120), et le cadre est engagé avec la structure de canal (123), de sorte que la prise électrique ainsi que le profilé de corps (120) forment un ensemble.

2. L'ensemble de prise électrique (100) selon la revendication 1, dans lequel la pluralité de canaux (121) est configurée en forme de C.

3. L'ensemble de prise électrique (100) selon la revendication 1, dans lequel le moyen de protection (130) est à vis.

4. L'ensemble de prise électrique (100) selon la revendication 1, dans lequel la pluralité de butées (112) est positionnée à côté de la pluralité de broches (111), afin de soutenir la stabilité de l'engagement entre la paire des capuchons d'extrémité (110) et le profilé de corps (120).
